Europäisches Patentamt

(19) European Patent Office

Office européen des brevets

(11) Numéro de publication : **0 320 395 B1**

(12) **FASCICULE DE BREVET EUROPEEN**

(45) Date de publication du fascicule du brevet :
03.07.91 Bulletin 91/27

(51) Int. Cl.⁵ : **A01G 13/06**

(21) Numéro de dépôt : **88403128.7**

(22) Date de dépôt : **09.12.88**

(54) Procédé et dispositif d'arrosage de cultures permettant une protection des plantes cultivées.

(30) Priorité : **09.12.87 FR 8717145**

(43) Date de publication de la demande :
**14.06.89 Bulletin 89/24**

(45) Mention de la délivrance du brevet :
**03.07.91 Bulletin 91/27**

(84) Etats contractants désignés :
**AT CH DE ES FR GB GR IT LI NL**

(56) Documents cités :
**FR-A- 1 252 268**
**FR-A- 1 540 389**
**FR-A- 2 514 607**
**US-A- 4 039 144**

(73) Titulaire : **Ayme de la Chevreliere, Charles Gournay**
**F-79110 Chef Boutonne (FR)**
Titulaire : **Ducrot, Jean**
**Kechiloa, RN10**
**F-64122 Urrugne (FR)**

(72) Inventeur : **Ayme de la Chevreliere, Charles Gournay**
**F-79110 Chef Boutonne (FR)**
Inventeur : **Ducrot, Jean**
**Kechiloa, RN10**
**F-64122 Urrugne (FR)**

(74) Mandataire : **Serin, Jean-Pierre et al**
**Cabinet PIERRE LOYER 77, rue Boissière**
**F-75116 Paris (FR)**

EP 0 320 395 B1

Jouve, 18, rue Saint-Denis, 75001 PARIS

## Description

L'invention concerne un procédé et und dispositif d'arrosage de plantations, de cultures agricoles et analogue, permettant une protection des plantes cultivées lorsque les conditions d'ambiance dans l'atmosphère environnante sont inadéquates (voir FR-A-1 540 389).

Il est connu depuis de nombreuses années que lorsque du givre se forme sur les plantes cultivées au moment où la température ambiante atteint 0°C, ces plantes sont alors protégées contre le gel par la couche de givre. En effet, la formation du givre sur la plante empêche la radiation des feuilles de la plante et la perte de chaleur de celle-ci, par effet de corps blanc.

Toutefois, lorsque le point de rosée est égal ou inférieur à 0°C, le gel survient avant que la plante ne soit recouverte par la rosée. Le givre ne se forme donc pas et la plante continue à irradier sa chaleur alors que la température ambiante atteint 0°C et continue à descendre. La plante va alors geler.

Afin d'éviter le gel des plantes cultivées dans un pareil cas, il est courant de les arroser lorsque la température s'approche de 0°C afin d'obtenir le givre protecteur au moment où elle atteint 0°C.

Cela implique une surveillance constante de l'évolution météorologique locale, notamment de la température ambiante et du point de rosée, dans les périodes ou le gel peut se produire, et le déclenchement de l'arrosage au moment opportun par l'agriculteur.

Un problème, différent de celui du gel, est également posé avec les plantations pour lesquelles la température de reproduction est très supérieure à la température de gel. Par exemple, dans les plantations de bananiers, la croissance et la reproduction des bananes ne se fait plus lorsque la température ambiante descend une fois au-dessous de 16°C.

Dans les pays où le cas est susceptible de se produire, il ne peut y avoir de récolte certaines années si, au moment de la reproduction la température a franchi la barre des 16°C en descendant.

L'invention vise à palier ces inconvénients en créant un procédé permettant, au moyen d'une surveillance constante des conditions météorologiques locales, de maintenir automatiquement, d'une part le point de rosée à une valeur acceptable pour que du givre se forme sur les plantes au moment où le gel survient et, d'autre part, notamment dans les cas où la température ne doit pas descendre au-dessous d'une certaine valeur déterminée, selon les plantes cultivées, un micro-climat présentant les qualités nécessaires pour favoriser la reproduction et la croissance des plantes, et en particulier une formation de rosée.

Ce but est atteint selon l'invention grâce à un procédé d'arrosage de cultures agricoles et autres dans lequel on utilise des asperseurs, alimentés en eau par des canalisations et produisant des micro-aspersions, disposés régulièrement dans les périmètres à protéger afin d'irriguer l'ensemble de ces périmètres et dans lequel on mesure la température extérieure, le point de rosée et le vent, caractérisé en ce que l'on utilise les valeurs mesurées de la température ambiante et du point de rosée pour produire d'une part un signal transmis à un dispositif (voir revendication 4) qui déclenche l'arrosage, et d'autre part pour produire un second signal qui lorsque la température ambiante descend au-dessous d'une valeur prédéterminée déclenche le réchauffage et la régulation de la température de l'eau en fonction du vent et de l'écart entre le point de rosée mesuré et le point de rosée prescrit pour remonter et maintenir le point de rosée au-dessus d'une valeur prédéterminée jusqu'à ce que la température ambiante descende au-dessous de ce point, auquel cas, l'arrosage et le chauffage de l'eau sont maintenus pour conserver la saturation en eau de l'air, afin d'obtenir sur l'ensemble de la plantation et jusqu'à une hauteur déterminée une atmosphère dont la température de point de rosée assure une protection des cultures contre les effets d'une baisse de température ambiante au-dessous d'une valeur déterminée par création et conservation de rosée et éventuellement de givre.

L'invention sera mieux comprise au moyen d'un exemple de réalisation décrit ci-après du procédé ainsi que du dispositif permettant la mise en oeuvre du procédé.

Sur les figures :

la figure 1 représente un diagramme du type diagramme de Mollier, sur lequel on a porté horizontalement, et en haut la température de point de rosée, en bas la masse d'eau évaporée par volume d'air considéré;

la figure 2 représente le schéma de principe d'un système d'arrosage selon l'invention dans le cas d'une régulation de la température de l'eau par vanne mélangeuse ;

la figure 3 représente une installation équipée de plusieurs systèmes selon l'invention ;

la figure 4 représente une seconde forme d'utilisation du système selon l'invention ;

la figure 5 représente le schéma de la seconde forme de réalisation ;

la figure 6 montre une application du dispositif selon l'invention ; et

la figure 7 montre une autre forme de réalisation.

Comme on l'a exposé ci-dessus, le procédé consiste à créer un micro-climat présentant les conditions favorables à la protection des plantes et à leur reproduction. Pour cela, il va falloir évaporer de l'eau et la chaleur d'évaporation sera prise à l'eau qui est plus chaude que l'air.

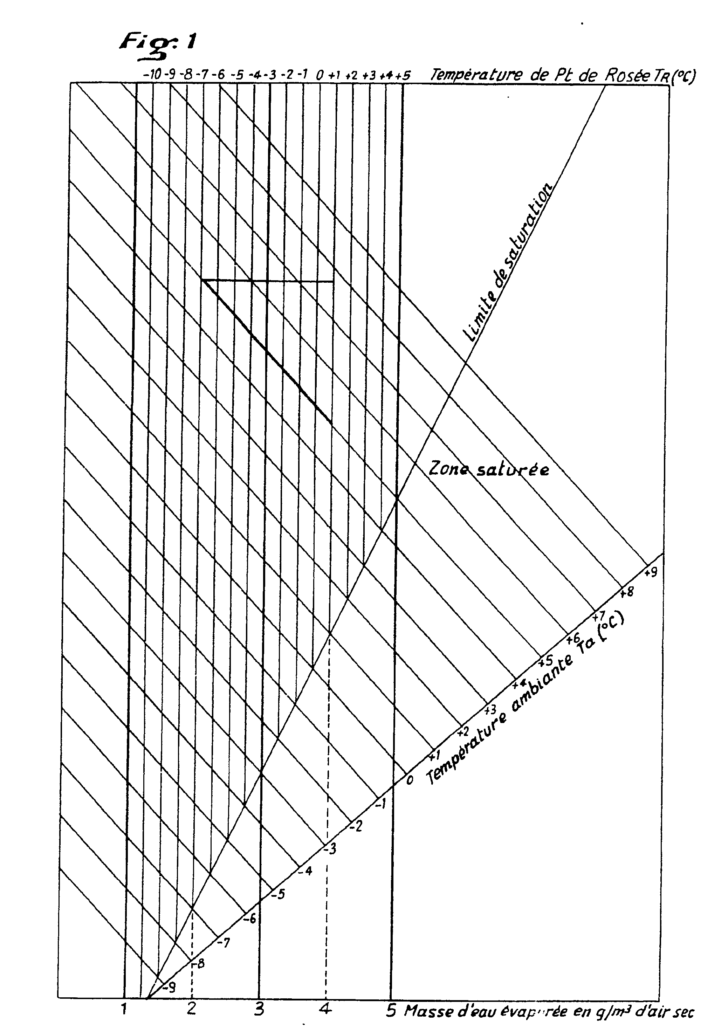

Le diagramme de la figure 1 permet de déterminer la masse d'eau à évaporer par m³ d'air pour ramener le point de rosée à une valeur acceptable.

On a porté sur le diagramme, horizontalement, en haut, la température de point de rosée, en bas la masse d'eau à évaporer en gramme par m³ d'air sec. Les lignes obliques représentent une valeur de la température ambiante en °C.

Supposons que l'on ait une température ambiante Ta = +5°C et que la température de point de rosée Tr soit de −7°C.

Le point du diagramme correspondant à cette situation est déterminé par l'intersection de la ligne correspondant à Ta = +5°C avec la ligne correspondant à Tr = −7°C.

On veut ramener la température de point de rosée Tr à une valeur acceptable pour la protection de la plante, par exemple Trc = +1°C.

La température ambiante restant constante, on se déplace sur la droite correspondant à Ta = +5°C jusquà l'intersection de cette droite avec la droite qui correspond à Tr = +1°C. On lit alors sur l'échelle horizontale inférieure du diagramme la valeur de la masse d'eau à évaporer par m³ d'air sec qui est d'environ 2 g.

Lorsque la température Tr de point de rosée sera égale à 1°C, quand Ta va passer au-dessous de 1°C, l'eau évaporée va se condenser sur les feuilles (rosée), ou faire un brouillard, en restituant la chaleur d'évaporation prise à l'eau d'arrosage et qui est d'environ de 600 calories par gramme. Si alors la température Ta descend au-dessous de 0°C, il va se former du givre, avec restitution de la chaleur de congélation.

La plante est ainsi doublement protégée du gel. D'une part, par la couche de rosée, ou mieux de givre qui empêche la radiation des feuilles (effet de corps blanc), et d'autre part, par l'apport de la chaleur de condensation et de congélation restituée par l'eau lors de la formation de la rosée puis du givre.

Comme on l'a déterminé au moyen du diagramme, il faut évaporer 2 g d'eau par mètre cube d'air. Si l'on désire dans notre exemple, protéger la plantation sur 3 m de hauteur et sur 1ha (10.000 m²), il va falloir protéger un volume de 3 m × 10.000 m² soit 30.000 m³, ce qui revient à évaporer 60.000 g d'eau (60 l).

Pour obtenir cette évaporation, on va devoir prendre la chaleur d'évaporation à l'eau qui est plus chaude que l'air. Or, pour une température de point de rosée de 0°C, 3.750 litres d'eau à 15°C donnent 3.750 × 15 = 56.250 kcal, soit 235.125 KJ. Pour évaporer 60 litres, il faut 60.000 g × 0,6 kcl = 36.000 kcal, soit 150.480 KJ.

Si l'on arrose avec 3.750 litres/ha/heure, on obtient une température minimale théorique de l'eau d'arrosage de : 36.000 kcal : 3.750 l = 9,6°C pour obtenir la chaleur nécessaire à l'évaporation de 60 litres d'eau en ramenant la température des 3.750 litres à 0°C. Les calculs précédents permettent d'établir le tableau suivant qui fournit une méthode de détermination de la température de l'eau et de la durée de l'arrosage. Une boîte de rosée, (appareil donnant la température ambiante Ta et la température Tr du point de rosée) va fournir la température de point de rosée Tr. Cette température Tr est remontée à la valeur prescrite Trc par évaporation d'une masse d'eau déterminée, qui a une température déterminée Tw, pendant un temps déterminé t au moyen du tableau, selon la rapidité avec laquelle il faut remonter le point de rosée pour renouveler les pertes dues au vent.

Les faibles valeurs de vent considérées sont dues aux brise-vents naturels ou artificiels.

L'arrosage sera effectué au moyen des dispositifs prévus à cet effet et renouvelé périodiquement afin de compenser les pertes de chaleur et d'humidité dues à l'environnement et au vent, pour maintenir constant le micro-climat obtenu.

TABLEAU

| Trc - Tr (°C) | g d'eau par m³ d'air | Litres/ha/ 3 mètres | Chaleur nécessaire en KJ | TEMPERATURE DE L'EAU EN °C POUR UN DEBIT DE 3.750 l/h | | | | |
|---|---|---|---|---|---|---|---|---|
| | | | | Vent : nul Montée de Tr en 1h | Vent:100m/30mn Montée de Tr en 30mn | Vent:100m/15mn Montée de Tr en 15mn | Vent:100m/8mn Montée de Tr en 8mn | Vent:100m/4mn Montée de Tr en 4mn |
| 1 | 0.285 | 8.57 | 21 497 | 1.4 | 2.8 | 5.6 | 11.2 | 22.4 |
| 2 | 0.57 | 17.14 | 42 994 | 2.8 | 5.6 | 11.2 | 22.4 | 44.8 |
| 3 | 0.855 | 25.71 | 64 491 | 4.1 | 8.4 | 16.6 | 33.6 | 67.2 |
| 4 | 1.14 | 34.28 | 85 988 | 5.5 | 10.8 | 21.6 | 43.2 | |
| 5 | 1.425 | 42.86 | 107 485 | 6.9 | 13.6 | 27.2 | 54.4 | |
| 6 | 1.71 | 51.42 | 128 982 | 8.2 | 16.4 | 32.8 | 65.5 | |
| 7 | 2 | 60 | 150 480 | 9.6 | 19.2 | 38.4 | | |
| 8 | 2.28 | 68.57 | 171 977 | 11 | 22 | 44 | | |
| 9 | 2.565 | 77.14 | 193 474 | 12.4 | 24.8 | 49.6 | | |
| 10 | 2.85 | 85.71 | 214 971 | 13.8 | 26.7 | 55.2 | | |
| 11 | 3.135 | 94.28 | 236 468 | 15.2 | 30.4 | 60.8 | | |
| 12 | 3.42 | 102.85 | 257 965 | 16.4 | 32.8 | 65.6 | | |
| 13 | 3.705 | 111.42 | 279 462 | 17.8 | 35.6 | | | |
| 14 | 4 | 120 | 300 959 | 19.2 | 38.4 | | | |
| 15 | 4.275 | 128.57 | 322 457 | 20.6 | 41.2 | | | |

EP 0 320 395 B1

EP 0 320 395 B1

## EXEMPLE

La "boite de rosée" va fournir une température de point de rosée de -6°C. Pour obtenir une température Tr de +1°C, il va falloir compenser un écart de 7°C.

Pour cela il faut évaporer environ 2 g d'eau par m³ d'air, soit 60 litres à l'hectare sur 3 m de haut. Ceci correspond à 150.480 KJ (36.000 kcal). Si l'on compte remonter le point de rosée à 1°C en 1 h, il faudra une eau à 9,6°C minimum.

Pour tenir compte du vent, on doit par exemple renouveler le micro-climat ainsi créé toutes les quinze minutes.

Pour obtenir les calories nécessaires, le tableau indique que la température de l'eau aux jets doit être de 38,4°C.

La méthode d'emploi du procédé ci-dessus va donc consister, afin d'économiser le chauffage de l'eau, à déclencher l'arrosage d'eau froide lorsque Ta atteint, en baissant, +5°C, par exemple, puis à commander le chauffage de l'eau lorsque Ta est descendu à +2°C afin de remonter la température du point de rosée à +1°C.

Ainsi, lorsque la température ambiante Ta va passer par Ta = Tr = 1°C, il y aura condensation et formation de givre à Ta = 0°C.

Dans l'exemple précédent, on a utilisé le procédé pour la protection contre le gel des plantes. Dans le cas de plantes nécessitant une température supérieure à une température donnée non nulle pour leur reproduction et pour leur croissance ou autres, on fixe la température Ta1 à partir de laquelle l'arrosage va commencer comme précédemment, par exemple à 4°C au-dessus de la température To, au-dessous de laquelle on ne veut pas descendre, puis la température Ta2 à partir de laquelle on va chauffer l'eau à 1°C au-dessus de To.

Par exemple pour les bananes, on fixera la température To à 16°C, Ta1 à 20°C et Ta2 à 17°C.

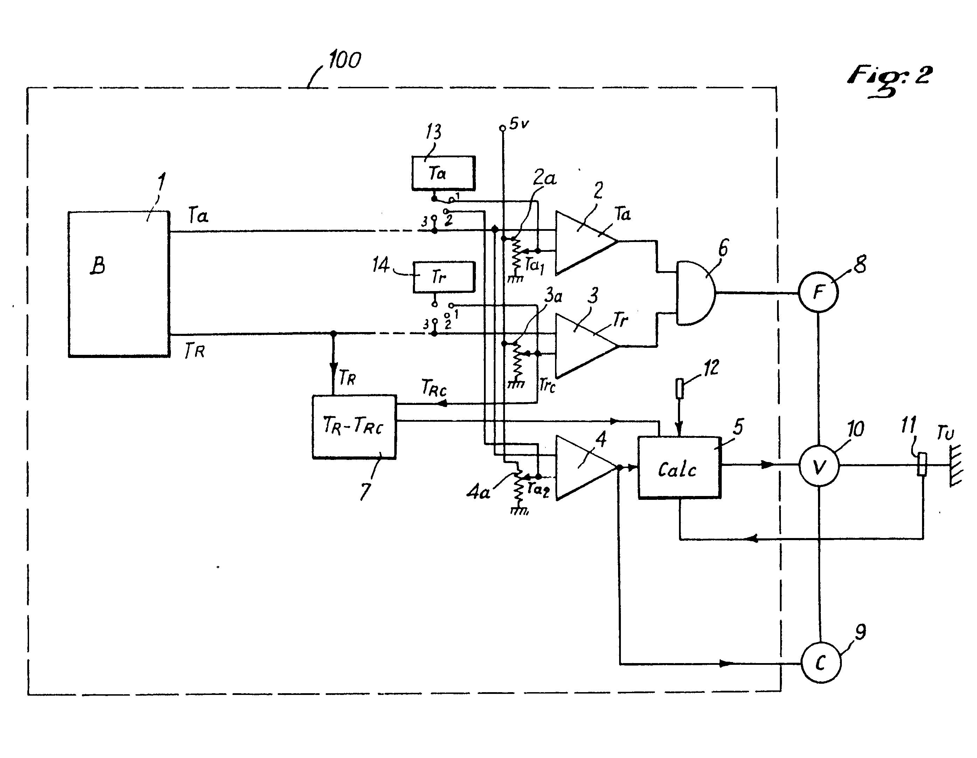

Un exemple du dispositif de mise en oeuvre du procédé selon l'invention est représenté à la figure 2.

Une "boîte de rosée" 1, située de préférence dans la plantation, mesure la température ambiante Ta et la température de point de rosée Tr. Ces valeurs sont transformées en un signal respectif envoyé à une entrée de comparateurs 2, 3 et 4. Le signal Ta représentant la température ambiante est envoyé à une entrée du comparateur 2 et a une entrée du comparateur 4. Dans le comparateur 2, le signal Ta va être comparé à une première valeur de température extérieure Ta1, dite température d'alerte, correspondant à la température ambiante au-dessous de laquelle il faudrait déclencher l'arrosage. Cette température d'alerte est introduite dans le comparateur par sa deuxième entrée et prédéterminée au moyen du potentiomètre 2a. Dans le comparateur 4, Ta va être comparée à une seconde valeur prescrite de température ambiante Ta2 au-dessous de laquelle l'eau d'arrosage doit être chauffée. Cette valeur Ta2 est déterminée au moyen du potentiomètre 4a et introduite dans la deuxième entrée du comparateur 4.

Le signal Tr de la température de point de rosée mesurée par la boîte 1 est envoyé à la première entrée du comparateur 3. Il y est comparé à une valeur prescrite de température de point de rosée Trc fixée au moyen du potentiomètre 3a et introduite à la deuxième entrée du comparateur 3. Les sorties des comparateurs 2 et 3 sont reliées aux entrées d'une porte ET 6 dont la sortie est elle-même reliée au système de manoeuvre d'une vanne d'eau froide 8.

La sortie du comparateur 4 est reliée d'une part au système de commande d'une vanne d'eau chaude 9 et d'autre part à un calculateur 5 dont le signal de sortie est envoyé au système de commande d'une vanne mélangeuse 10 reliée aux conduites des asperseurs.

Le calculateur 5 détermine la position de la vanne mélangeuse en fonction de la température d'eau d'arrosage Tw mesurée par une soude 11 à la sortie de la vanne 10, de la vitesse du vent mesurée par un anémomètre 12 et de la différence entre les valeurs du point de rosée mesuré Tr et du point de rosée prescrit Trc, calculée par un comparateur 7.

Un affichage 13 permet de visualiser, en position 1 la valeur de la température d'alerte Ta1, en position 2 la valeur de la température de déclenchement du chauffage Ta2 et en position 3 la température ambiante Ta réelle.

Un affichage 14 permet de visualiser, en position 1 la température du point de rosée prescrit Trc et en position 3 la température du point de rosée réel Tr.

Le système fonctionne comme suit.

La température d'alerte Ta1 ayant été préalablement reglée sur le potentiomètre 2a à +5°C, la température de point de rosée prescrit à +1°C sur le potentiomètre 3a et la température de déclenchement du chauffage Ta2 à +2°C sur le potentiomètre 4a, (ces valeurs ne sont indiquées ici qu'à titre d'exemple), le signal Ta provenant de la boîte de rosée 1 est comparé à la valeur Ta1 dans le comparateur 2 et en même temps, le signal Tr provenant également de la boîte de rosée est comparé à la valeur prescrite Trc dans le comparateur 3. Les signaux issus des comparateurs 2 et 3 sont envoyés à la porte ET 6 qui ne laisse rien passer tant que ses deux entrées ne sont pas activées. Lorsque la température mesurée Ta est égale ou inférieure à la valeur Ta1 =

5

+5°C, le comparateur 2 active la première entrée de la porte ET. Tant que Tr est supérieure à la valeur de comparaison Trc dans le comparateur 3, la deuxième entrée de la porte ET n'est pas activée. Lorsque Tr descend à la valeur prescrite Trc de +1°C, le comparateur 3 active la deuxième entrée de la porte ET 6 et la vanne 8 de commande de l'arrosage à l'eau froide est ouverte. L'arrosage se poursuit à l'eau froide jusqu'à ce que la température ambiante Ta atteigne la valeur Ta2 = +2°C. Le comparateur 4 déclenche alors le démarrage de la chaudière et l'ouverture de la vanne 9 de l'eau chaude. En même temps le calculateur 5 va régler la température de l'eau d'arrosage en commandant la vanne mélangeuse 10 en fonction de la différence de température du point de rosée mesuré et du point de rosée prescrit, de la vitesse du vent pour le renouvellement du micro-climat, et va réguler la position de cette vanne en tenant compte de la température effective Tw de l'eau d'arrosage.

Au lieu d'utiliser une vanne mélangeuse 10, le système peut être pourvu avec une commande de la position des vannes d'eau chaude 9 et d'eau froide 8. Les deux vannes 8, 9 étant commandées en opposition, l'une dans le sens de l'ouverture, l'autre dans le sens de fermeture afin d'obtenir la température d'eau d'arrosage désirée.

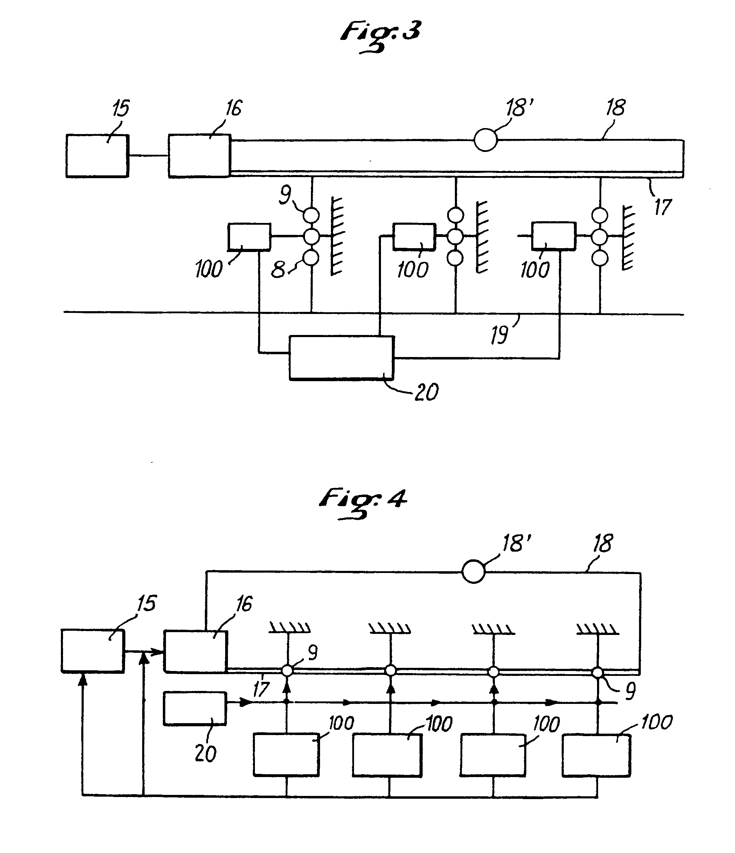

On a représenté sur la figure 3, une installation d'arrosage comportant plusieurs dispositifs selon l'invention.

L'eau chaude est amenée aux vannes d'eau chaude 9 au moyen d'une canalisation de forte section 17 en provenance d'une chaudière 16. La pression est assurée par une pompe 15. Afin de maintenir la température de l'eau d'arrosage la plus stable possible, l'eau non utilisée de la canalisation 17 est recyclée dans la chaudière 16 au moyen d'une canalisation de retour 18 de faible section et d'un accélérateur 18'. On évite ainsi les baisses de température de l'eau arrivant aux vannes 9, et notamment à celles les plus éloignées de la chaudière.

L'eau froide est, pour sa part, amenée par une canalisation 19 aux vannes d'eau froide 8.

Les dispositifs 100 selon l'invention, comprenant chacun une une boîte de rosée et les composants de la figure 2, sont disposés dans la plantation de façon à assurer un arrosage complet sur toute la surface. Chaque boîte de rosée va permettre localement la régulation de la température de l'eau.

Dans le cas d'une limitation en débit, un programmateur 20 peut autoriser le fonctionnement successif des systèmes 100 pour obtenir un arrosage séquentiel.

Selon une autre forme de réalisation de l'invention, la modulation de la température Tw de l'eau d'arrosage ne se fait plus par une vanne mélangeuse 10 avec arrivée d'eau froide et arrivée d'eau chaude. Elle se fait par commande directe de la chaudière par le dispositif 100 qui agit en outre sur les vannes des asperseurs.

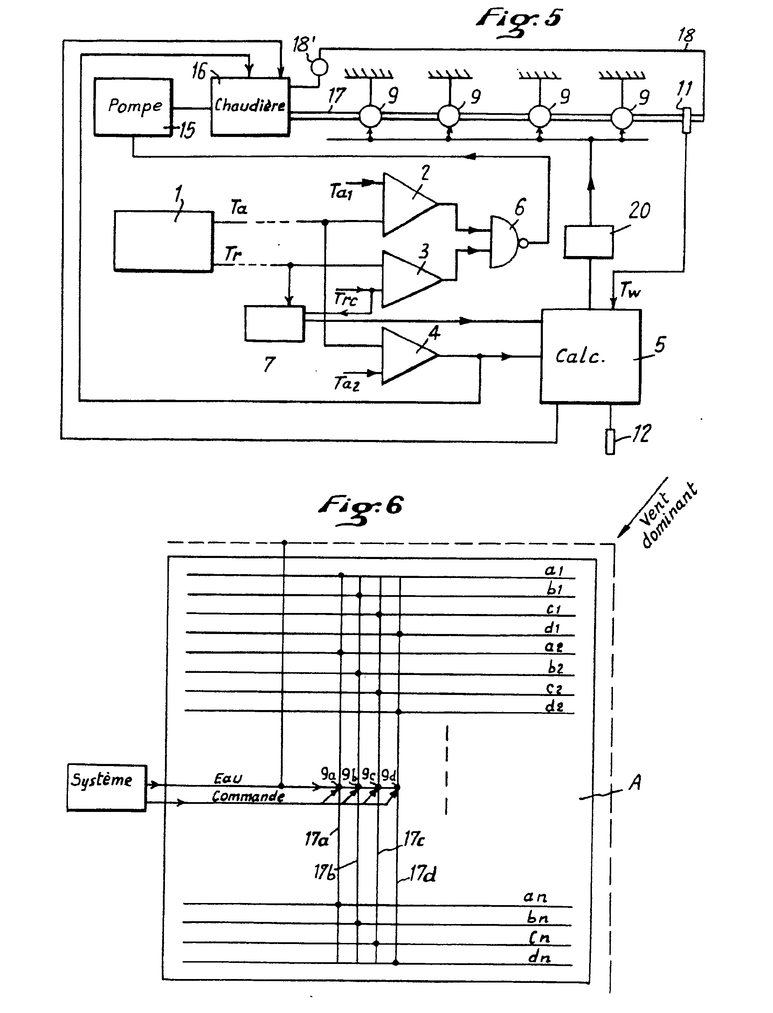

Un tel dispositif a été représenté sur les figures 4 et 5. Une seule canalisation 17 amène l'eau provenant de la chaudière. A Ta = Ta1, le système déclenche la pompe 15. Cette eau est non chauffée tant que Ta est comprise entre Ta1 et Ta2. Dès que Ta atteint Ta2, en descendant, le système déclenche le chauffage de l'eau et effectue une régulation par thermostat de la chaudière au moyen du calculateur 5. Un programmateur 20 commande l'ouverture séquentielle des vannes 9. Afin d'économiser sur le matériel quant à sa taille (notamment pour le débit), l'arrosage va être effectué par tranches de terrain. Le calculateur 5 du système va commander séquentiellement l'ouverture et la fermeture des vannes 9 de chaque secteur d'aspersion selon un rythme déterminé.

Selon une autre forme de réalisation de l'invention, l'arrosage va dépendre directement de la température ambiante Ta et l'allumage de la chaudière du point de rosée Tr, une deuxième valeur de la température ambiante, ou de la température de sol, assurant un allumage de sécurité de l'arrosage et de la chaudière.

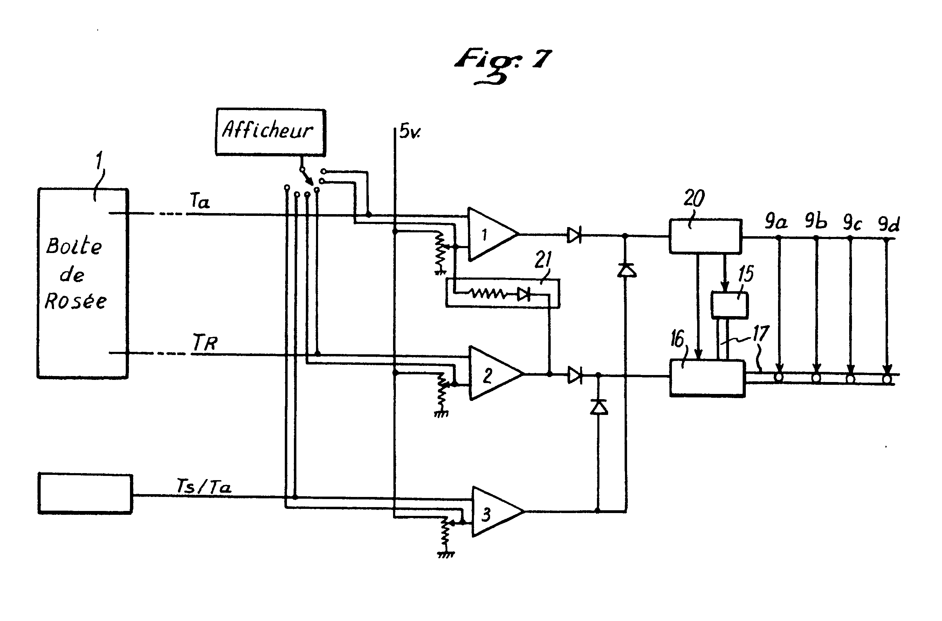

Un tel dispositif est présenté sur la figure 7.

La canalisation 17 amène l'eau de la pompe 15 en passant par la chaudière 16 aux vannes 9. A Ta = Ta1 le comparateur 1 déclenche le programmateur 20 qui déclenche la pompe 15 et l'ouverture séquentielle des vannes 9 selon un rythme déterminé. Cette eau est non chauffée si Tr est supérieur à sa valeur de consigne. Si Tr est inférieur à sa valeur de consigne le comparateur 2 allume la chaudière qui reste allumée jusqu'à ce que le programmateur revienne sur la vanne 9a où se trouve la boîte de rosée 1. Si Tr est repassé au dessus de la consigne, la chaudière s'arrête ; sinon elle continue pendant un nouveau tour des vannes 9.

D'autre part si Tr est au-dessus de la consigne, pour éviter des gaspillages d'eau froide inutiles, un dispositif 21 va automatiquement faire baisser la consigne de Ta du comparateur 1 un peu au-dessus de la valeur de Tr. Ceci va empêcher un arrosage à l'eau froide alors que l'air est suffisamment pourvu d'eau évaporée.

D'autre part, en vue d'assurer une parfaite sécurité, une autre sonde d'ambiance peut être placée en surface du sol ou dans une branche, et sera reliée au comparateur 3. Sa consigne, en dessous de Ta et de Tr, provoquera le démarrage de l'arrosage et de la chaudière en cas de défaillance des comparateurs 1 ou 2.

Un exemple d'application de l'invention est décrit ci-après, à l'aide de la figure 6 ;

Sur une surface cultivée A les asperseurs sont disposés en rangées parallèles alimentées par groupes de rangées par quatre canalisations 17a, 17b, 17c, 17d. Afin de bien répartir l'arrosage, les rangées reliées à une canalisation sont intercalées avec celles alimentées par les autres canalisations. Ainsi, la rangée a1 est suivie

6

des rangées b1, c1 et d1, puis a2, b2, c2, d2 etc..

Les canalisations 17a à 17d sont pourvues de vannes 9a à 9d dont l'ouverture et la fermeture sont commandées séquentiellement par le système. Le système va moduler la température de l'eau arrivant aux vannes 9a à 9d soit par régulation thermostatique de la chaudière soit par vanne mélangeuse, située à proximité des vannes 9.

Afin d'éviter les pertes dues au vent, on place sur les côtés de la surface A, exposés au vent dominant, des asperseurs alimentés en continu par une ou plusieurs canalisations et éventuellement on y placera des brises-vent.

Le calculateur du système va commander l'arrosage séquentiel. D'abord la canalisation 17a et les rangées d'asperseurs a1, a2, a3, a4,... an, en ouvrant la vanne 9a. Puis après l'avoir refermée, les rangées b1, b2, b3... bn, en ouvrant la vanne 9b et ainsi de suite jusqu'à dn. Lorsqu'il a refermé la vanne 9d, il réouvre la vanne 9a et le cycle recommence.

Durant le cycle, les asperseurs situés sur les deux côtés de la surface cultivée exposés au vent dominant fonctionnent en permanence. On maintient ainsi le micro-climat créé.

On a décrit deux exemples de réalisation de l'invention. L'un, fonctionnant avec une vanne mélangeuse de l'eau chaude et de l'eau froide, commandée pour réguler la température de l'eau, l'autre, fonctionnant par commande directe de la chaudière pour réguler la température de l'eau.

On peut également envisager une modulation du temps d'arrosage et garder une température de l'eau constante et relativement élevée. Le calculateur 5 donne alors des temps d'arrosage au lieu de températures d'arrosage, afin de fournir une puissance calorifique identique.


**Revendications**

1. Procédé d'arrosage de cultures agricoles et analogue, dans lequel on utilise des asperseurs, alimentés en eau par des canalisations et produisant des micro-aspersions, disposés régulièrement dans les périmètres à protéger afin d'irriguer l'ensemble de ces périmètres et dans lequel on mesure la température extérieure et le point de rosée, caractérisé en ce qu'on utilise les valeurs mesurées de la température ambiante et du point de rosée pour produire d'une part un signal transmis à un dispositif qui déclenche l'arrosage, et d'autre part, un second signal qui, lorsque la température ambiante est descendue à une valeur prédéterminée, déclenche le réchauffage et la régulation de la température de l'eau en fonction de l'écart entre le point de rosée mesuré et le point de rosée prescrit pour remonter et maintenir le point de rosée au-dessus d'une valeur prédéterminée jusqu'à ce que la température ambiante descende au-dessous de ce point auquel cas l'arrosage et le chauffage de l'eau sont maintenus afin d'obtenir sur l'ensemble de la plantation et jusqu'à une hauteur déterminée une atmosphère dont la température de point de rosée assure une protection des cultures contre les effets d'une baisse de température ambiante au-dessous d'une valeur déterminée, par création et conservation de rosée et éventuellement de givre.

2. Procédé selon la revendication 1, caractérisé en ce que la régulation de la température de l'eau d'arrosage se fait également en fonction de la vitesse du vent.

3. Procédé selon l'une quelconque des revendications 1 et 2, caractérisé en ce que la régulation de température de l'eau d'arrosage se fait également en fonction de la température du sol.

4. Dispositif d'arrosage pour la mise en oeuvre du procédé selon l'une quelconque des revendications 1 à 3, comportant une boîte de rosée (1) mesurant la température ambiante (Ta) et la température de point de rosée (Tr) ; et caractérisé en ce qu'il comporte aussi :

— un ensemble de comparateurs (2, 3, 4) permettant le déclenchement de l'arrosage et le démarrage du chauffage de l'eau d'arrosage en fonction de valeurs prédéterminées de la température ambiante (Ta1, Ta2) et de la température de point de rosée (Trc) et

— un système de régulation de la température de l'eau d'arrosage (Tw) au moyen d'un calculateur (5) en fonction de la différence entre la température de point de rosée mesurée, de la température de point de rosée prescrite et de la température de l'eau (Tw) elle-même.

5. Dispositif d'arrosage selon la revendication 4, caractérisé en ce que le calculateur (5) prend en compte la vitesse du vent mesurée par un anémomètre (12) pour régler la température de l'eau d'arrosage.

6. Dispositif selon l'une quelconque des revendications 4 et 5, caractérisé en ce que le calculateur prend un compte la température du sol mesurée par une sonde.

7. Dispositif selon l'une quelconque des revendications 4 à 6, caractérisé en ce que le système (100) agit sur une au moins des vannes d'eau froide (8) pour déclencher l'arrosage, sur au moins une vanne d'eau chaude (9) pour amener de l'eau chaude aux asperseurs et sur au moins une vanne mélangeuse pour doser le mélange d'eau chaude et d'eau froide afin de réguler la température de l'eau d'arrosage.

8. Dispositif selon l'une quelconque des revendications 4 à 6, caractérisé en ce que le système (100) agit sur une au moins des vannes d'eau froide (8) pour déclencher l'arrosage ou sur au moins une vanne d'eau chaude (9) pour amener l'eau chaude aux asperseurs et commande de façon inversée la position des vannes d'eau froide (8) et d'eau chaude, afin de doser le mélange d'eau chaude et d'eau froide et de réguler la température d'eau d'arrosage.

9. Dispositif selon l'une quelconque des revendications 4 à 6, caractérisé en ce que le système commande l'arrosage en agissant sur une pompe (15) et le chauffage ainsi que la régulation de la température de l'eau agissant directement sur la chaudière (16).

10. Dispositif selon l'une quelconque des revendications 4 à 9, caractérisé en ce qu'un programmateur (20) autorise ou arrête l'arrosage en agissant sur les vannes (8, 9) ou sur le système (100).

**Ansprüche**

1. Verfahren zum Beregnen von landwirtschaftlichen Kulturen und dergleichen, bei dem man Regner verwendet, denen durch Rohrleitungen Wasser zugeführt wird und die in den zu schützenden Bereichen regelmäßig angeordnete Mikroregen erzeugen, um diese Bereiche insgesamt zu beregnen, und bei dem man die Außentemperatur und den Taupunkt mißt, **dadurch gekennzeichnet,** daß man die gemessenen Werte der Umgebungstemperatur und des Taupunktes anwendet, um einerseits ein Signal zu erzeugen, das einer Vorrichtung, die die Beregnung auslöst, zugeführt wird, und andererseits ein zweites Signal zu erzeugen, das, wenn die Umgebungstemperatur auf einen festgelegten Wert gesunken ist, die Erwärmung und die Regelung der Temperatur des Wassers als Funktion des Unterschiedes zwischen dem gemessenen Taupunkt und dem vorgeschriebenen Taupunkt auslöst, um den Taupunkt zu erhöhen und oberhalb eines festgelegten Wertes zu halten, bis die Umgebungstemperatur unter diesen Punkt sinkt, wobei die Beregnung und die Erwärmung des Wassers in diesem Fall aufrechterhalten werden, um über der gesamten Anpflanzung und bis zu einer festgelegten Höhe eine Atmosphäre zu erhalten, deren Taupunkttemperatur durch Bildung und Erhaltung von Tau und gegebenenfalls von Reif für einen Schutz der Kulturen gegen die Wirkungen eines Sinkens der Umgebungstemperatur unter einen festgelegten Wert sorgt.

2. Verfahren nach Anspruch 1, dadurch gekennzeichnet, daß die Regelung der Beregnungswassertemperatur auch als Funktion der Windgeschwindigkeit erfolgt.

3. Verfahren nach einem der Ansprüche 1 und 2, dadurch gekennzeichnet, daß die Regelung der Beregnungswassertemperatur auch als Funktion der Bodentemperatur erfolgt.

4. Beregnungsvorrichtung zur Durchführung des Verfahrens nach einem der Ansprüche 1 bis 3 mit einer Taudose (1), die die Umgebungstemperatur (Ta) und die Taupunkttemperatur (Tr) mißt, dadurch gekennzeichnet, daß sie auch

eine Gruppe von Vergleichseinrichtungen (2, 3, 4), die das Auslösen der Beregnung und das Einleiten der Erwärmung des Beregnungswassers als Funktion festgelegter Werte der Umgebungstemperatur (Ta1, Ta2) und der Taupunkttemperatur (Trc) gestatten, und

ein System zur Regelung der Beregnungswassertemperatur (Tw) mit einem Rechner (5) als Funktion des Unterschiedes zwischen der gemessenen Taupunkttemperatur, der vorgeschriebenen Taupunkttemperatur und der Wassertemperatur (Tw) selbst aufweist.

5. Beregnungsvorrichtung nach Anspruch 4, dadurch gekennzeichnet, daß der Rechner (5) zur Regelung der Beregnungswassertemperatur die Windgeschwindigkeit berücksichtigt, die mit einem Anemometer (12) gemessen wird.

6. Vorrichtung nach einem der Ansprüche 4 und 5, dadurch gekennzeichnet, daß der Rechner die Bodentemperatur berücksichtigt, die mit einem Meßfühler gemessen wird.

7. Vorrichtung nach einem der Ansprüche 4 bis 6, dadurch gekennzeichnet, daß das System (100) auf wenigstens eines von Kaltwasserventilen (8) einwirkt, um die Beregnung auszulösen, auf wenigstens ein Warmwasserventil (9) einwirkt, um den Regnern Warmwasser zuzuführen, und auf wenigstens ein Mischventil einwirkt, um die Mischung von Warmwasser und Kaltwasser zu dosieren und die Beregnungswassertemperatur zu regeln.

8. Vorrichtung nach einem der Ansprüche 4 bis 6, dadurch gekennzeichnet, daß das System (100) auf wenigstens eines von Kaltwasserventilen (8) einwirkt, um die Beregnung auszulösen, oder auf wenigstens ein Warmwasserventil (9) einwirkt, um den Regnern Warmwasser zuzuführen, und die Stellung des Kaltwasserventils (8) und des Warmwasserventils in entgegengerichteter Weise steuert, um die Mischung von Warmwasser und Kaltwasser zu dosieren und die Beregnungswassertemperatur zu regeln.

9. Vorrichtung nach einem der Ansprüche 4 bis 6, dadurch gekennzeichnet, daß das System die Beregnung steuert, indem es auf eine Pumpe (15) einwirkt, und die Erwärmung sowie die Regelung der Temperatur des Wassers steuert, indem es direkt auf den Kessel (16) einwirkt.

10. Vorrichtung nach einem der Ansprüche 4 bis 9, dadurch gekennzeichnet, daß ein Programmiergerät (20) die Beregnung gestattet oder anhält, indem es auf die Ventile (8, 9) oder auf das System (100) einwirkt.

## Claims

1. Process for watering agricultural crops and the like, in which sprinklers are used which are supplied with water by pipes and which produce micro-sprinkling, arranged regularly within the perimeters to be protected in order to irrigate all these perimeters and in which the external temperature and the dew point are measured, characterised in that the measured values of the ambient temperature and of the dew point are used to produce firstly a signal transmitted to a device which triggers the watering, and secondly a second signal which, once the ambient temperature has dropped to a predetermined value, triggers the reheating and the regulation of the temperature of the water as a function of the difference between the measured dew point and the prescribed dew point to increase the dew point again and maintain it above a predetermined value until the ambient temperature drops below this point, in which case the watering and the heating of the water are maintained in order to obtain over the entire plantation and up to a given height an atmosphere, the dew point temperature of which ensures protection of the crops against the effects of a drop in ambient temperature to below a given value, by creating and retaining dew and possibly of frost.

2. Process according to Claim 1, characterised in that the temperature of the irrigation water is also regulated as a function of the wind speed.

3. Process according to any one of Claims 1 and 2, characterised in that the temperature of the irrigation water is also regulated as a function of the temperature of the soil.

4. Watering apparatus for carrying out the process according to any one of Claims 1 to 3, comprising a dew box (1) measuring the ambient temperature (Ta) and the dew point temperature (Tr), and characterised in that it also comprises :
   – a set of comparators (2, 3, 4) permitting the triggering of watering and the start of heating the irrigation water as a function of predetermined values of the ambient temperature (Ta1, Ta2) and of the dew point temperature (Trc) and
   – a system for regulating the temperature of the irrigation water (Tw) by means of a computer (5) as a function of the difference between the measured dew point temperature, of the prescribed dew point temperature and of the temperature of the water (Tw) itself.

5. Watering apparatus according to Claim 4, characterised in that the computer (5) takes into account the speed of the wind measured by an anemometer (12) in order to regulate the temperature of the irrigation water.

6. Apparatus according to any one of Claims 4 and 5, characterised in that the computer takes into account the temperature of the soil measured by a probe.

7. Apparatus according to any one of Claims 4 to 6, characterised in that the system (100) acts on at least one of the cold water sluices (8) to trigger watering, on at least one hot water sluice (9) to supply hot water to the sprinklers and on at least one mixer sluice to meter the mixture of hot water and cold water in order to regulate the temperature of the irrigation water.

8. Apparatus according to any one of Claims 4 to 6, characterised in that the system (100) acts on at least one of the cold water sluices (8) to trigger the watering or on at least one hot water sluice (9) to supply the hot water to the sprinklers, and conversely controls the position of the cold water sluices (8) and hot water sluices in order to meter the mixture of hot water and cold water and to regulate the temperature of the irrigation water.

9. Apparatus according to any one of Claims 4 to 6, characterised in that the system controls the watering by acting on a pump (15) and the heating and also the regulation of the temperature of the water acting directly on the boiler (16).

10. Apparatus according to any one of Claims 4 to 9, characterised in that a programmer (20) permits or stops the watering by acting on the sluices (8, 9) or on the system (100).

**Fig: 1**

Fig. 2

# Fig. 3

# Fig. 4

## Fig. 5

## Fig. 6

Vent dominant

Fig. 7